Europäisches Patentamt

European Patent Office

Office européen des brevets

(19)

(11) Publication number: **0 262 883**
**A1**

(12) # EUROPEAN PATENT APPLICATION

(21) Application number: **87308530.2**

(22) Date of filing: **25.09.87**

(51) Int. Cl.⁴: **F 02 D 9/08**
**F 02 D 11/10**

(30) Priority: **29.09.86 JP 230967/86**

(43) Date of publication of application:
**06.04.88 Bulletin 88/14**

(84) Designated Contracting States: **DE FR GB**

(71) Applicant: **MITSUBISHI DENKI KABUSHIKI KAISHA**
**2-3, Marunouchi 2-chome Chiyoda-ku**
**Tokyo 100 (JP)**

(72) Inventor: **Asayama, Yoshiaki c/o Himeji Seisakusho**
**Mitsubishi Denki Kabushiki Kaisha 840, Chiyoda-cho**
**Himeji City Hyogo Prefecture (JP)**

(74) Representative: **Hackett, Sean James et al**
**Marks & Clerk 57-60 Lincoln's Inn Fields**
**London WC2A 3LS (GB)**

(54) **Throttling apparatus for an automobile.**

(57) A throttling apparatus for an automotive vehicle is disclosed which has two independently-rotated throttle valves (2, 4). A first throttle valve (2) is rotatably supported in an air intake passageway (1) of the vehicle and has a cylindrical through hole (3) formed therein. The first throttle valve (2) can be continuously rotated between an open position, in which the through hole is unobstructed and air can flow through the first throttle valve, and a closed position, in which the through hole (3) is obstructed by the walls of the air intake passageway and air can not flow through the air intake passageway. The second throttle valve (4) is a butterfly valve which is rotatably disposed in the through hole (3) in the first throttle. A controller (20) and actuators (10,11) rotate the two throttle valves independently with respect to one another. A controller (2) computes the optimal relative rotational angle (X) of the two throttle valves (2, 4) based on the operating state of the engine, the running condition of the vehicle, and the amount by which the accelerator pedal is depressed. The controller (20) controls the actuators (10, 11) so as to rotate the throttle valves (2, 4) until the actual relative rotational angle equals the optimal relative rotational angle.

FIG. 1

EP 0 262 883 A1

**Description**

THROTTLING APPARATUS FOR AN AUTOMOBILE

BACKGROUND OF THE INVENTION

This invention relates to an apparatus for throttling the engine of an automotive vehicle, the term "automotive vehicle" being used herein to include passenger vehicles, trucks, tractors, and other vehicles which are powered by an internal combustion engine.

A conventional throttling apparatus for an automotive vehicle comprises a throttle valve in the form of a butterfly valve which is pivotably mounted in an air intake pipe of the engine of the vehicle. The throttle valve is opened and closed by a mechanical linkage which is connected between the throttle valve and the accelerator pedal of the vehicle. In recent years, however, a throttle valve control mechanism has been developed which opens and closes this type of throttle valve using an electronically-controlled actuator. The actuator includes an electric drive motor which rotates the throttle valve in response to electric signals from a controller. The controller calculates the optimal degree of throttle opening based on the amount by which the accelerator pedal is depressed by the driver, the operational state of the engine (indicated, for example, by the engine rotational speed), and the running condition of the vehicle (indicated, for example, by the vehicle speed or by which gears are engaged), and it outputs suitable electrical control signals to the actuator. As there is no mechanical linkage between the throttle valve and the accelerator pedal, play and frictional losses, which are inherent drawbacks of a mechanical linkage, are avoided.

However, if the electronically-controlled actuator of such a throttle control mechanism becomes inoperable, depressing the accelerator pedal has no effect on the throttle valve. Therefore, a vehicle which has this type of throttle valve control mechanism must be equipped with a safety device which prevents the vehicle from running with the throttle stuck in an open position should the actuator become inoperable. Usually, this safety device is one which closes the throttle valve when the actuator malfunctions. Japanese Patent Application Laid-Open No. 55-145867 (1980) discloses a number of such safety devices. One which is disclosed therein is a safety device comprising a return spring which is mounted on the shaft of a throttle valve and closes the throttle valve when the control apparatus for the throttle valve malfunctions. Another is a safety device comprising an electromagnetic clutch which disconnects an electronically-controlled actuator from the shaft of the throttle valve when the throttle valve control apparatus malfunctions. A third safety device comprises a return spring and an electromagnetic clutch, the return spring being released so as to close the throttle valve when the electromagnetic clutch is released.

However, as these safety devices close the throttle valve when the actuator malfunctions, the vehicle becomes unable to move under its own power. Therefore, when the throttle valve control apparatus malfunctions, the vehicle must be towed by another vehicle to a garage and be repaired.

SUMMARY OF THE INVENTION

It is therefore an object of the present invention to provide a throttling apparatus for an automotive vehicle of the type employing an electronically-controlled actuator which is more reliable than a conventional throttling apparatus.

It is another object of the present invention to provide a throttling apparatus for an automotive vehicle which has a faster response than a conventional throttling apparatus.

A throttling apparatus in accordance with the present invention is equipped with a first and a second throttle valve which can be independently rotated so as to throttle the engine. The first throttle valve is rotatably supported inside an air intake pipe of the engine and has a through hole which serves as an air conduit formed therein. The first throttle valve can be continuously rotated between an open position, in which the through hole is unobstructed and intake air can pass through it, and a closed position, in which the through hole is obstructed and the air intake passageway is blocked. The second throttle valve is rotatably supported inside the through hole of the first throttle valve and is rotatable between a closed position in which it blocks the passage of air through the through hole and an open position in which air can flow through the hole.

The first and second throttle valves are rotated with respect to one another by a first drive means and a second drive means, respectively. The throttling apparatus is further equipped with first sensing means for sensing the relative rotational angle of the two throttle valves, a second sensing means for sensing the operational state of the engine, a third sensing means for sensing the running condition of the vehicle, and a fourth sensing means for sensing the amount by which the accelerator pedal of the vehicle is being depressed by the driver, each of the sensing means producing a corresponding output signal. A controller which is responsive to the output signals from each of the sensing means computes the optimal relative rotational angle of the throttle valves based on the operational state of the engine, the running condition of the vehicle, and the amount by which the accelerator is being depressed, and it controls the two drive means so that the actual relative rotational angle is equal to the optimal relative rotational angle.

In a preferred embodiment, each of the drive means comprises an electronically-controlled actuator having an electric drive motor which is connected to one of the throttle valves so as to rotate it. Furthermore, in a preferred embodiment, the second sensing means for sensing the engine operational state is a sensor which measures the rotational speed of the engine, and the third sensing means for sensing the running condition of the vehicle is a sensor which measures the vehicle speed.

BRIEF DESCRIPTION OF THE DRAWINGS

Figure 1 is a partially cross-sectional schematic view of an embodiment of a throttling apparatus in accordance with the present invention.

Figure 2 is a cross-sectional view taken along Line II-II of Figure 1.

In the drawings, the same reference numerals indicate the same or corresponding parts.

DESCRIPTION OF THE PREFERRED EMBODIMENT

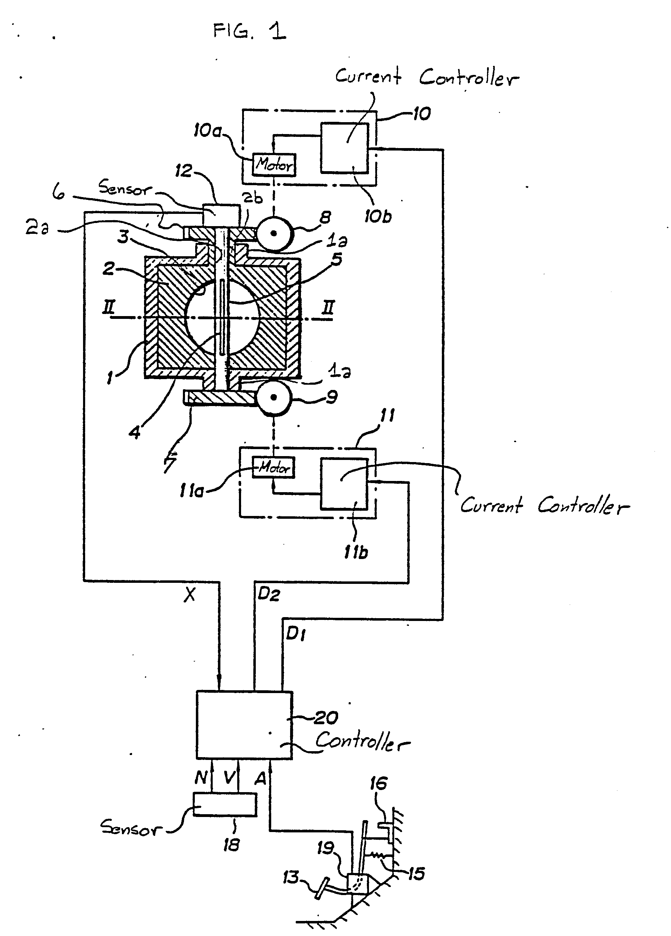

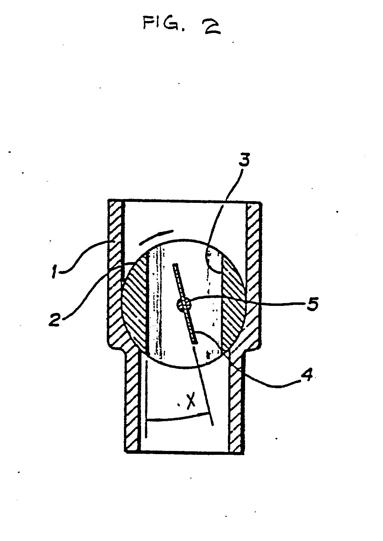

Hereinbelow, a preferred embodiment of a throttling apparatus in accordance with this invention will be described while referring to the accompanying drawings, Figure 1 of which is a schematic view of this embodiment and Figure 2 of which is a cross-sectional view taken along Line II-II of Figure 1.

As shown in these figures, a throttling apparatus of the present invention has two throttle valves 2 and 4 which are disposed in the carburetor barrel 1 of the engine of an automobile. The carburetor barrel 1 has a rectangular transverse cross section. The first throttle valve 2 is a generally cylindrical member which is supported so as to rotate about its longitudinal axis, which is perpendicular to the longitudinal axis of the carburetor barrel 1. A through hole 2a is formed along the rotational axis of the first throttle valve 2. Another through hole 3 which extends perpendicular to the longitudinal axis is formed midway between the ends of the first throttle valve 2. This through hole 3 serves as a conduit for intake air for the engine. A trunnion 2b projects from one of the end surfaces of the first throttle valve 2, and a first gear 6 is formed on the outer end of the trunnion 2b. The trunnion 2b is journalled by one of two cylindrical bearing portions 1b which are formed on the outer surfaces of the carburetor barrel 1. The dimensions of the first throttle valve 2 are chosen so that there is only enough clearance between the outer surface of the first throttle valve 2 and the inner surface of the carburetor barrel 1 to allow the first throttle valve 2 to rotate freely. Therefore, intake air can flow through the carburetor barrel 1 only by passing along the through hole 3. The first throttle valve 2 can be continuously rotated between an open position (shown in Figure 1) in which the through hole 3 is unobstructed, and an unillustrated closed position in which the through hole 3 is angled such that the upstream end of the through hole 3 is obstructed by the walls of the carburetor barrel 1.

The second throttle valve 4 is a butterfly valve comprising a disk which is secured to a rotating valve shaft 5. The valve shaft 5 passes loosely through the longitudinally-extending through hole 2a and can freely rotate with respect to the first throttle valve 2. The diameter of the disk of the second throttle valve 4 is approximately equal to the bore of the through hole 3 so that the through hole 3 can be opened or closed by rotating the second throttle valve 4. One end of the valve shaft 5 is journalled by the inner surface of the trunnion 2b, while the other end is journalled by the other cylindrical bearing portion 1a of the carburetor barrel 1. A second gear 7 is coaxially secured to the end of the valve shaft 5 which is journalled by the cylindrical bearing portion 1a.

The first gear 6 meshes with a drive pinion 8 which is mounted on the output shaft of a first direct current drive motor 10a so that when the drive motor 10a is operated, the first throttle valve 2 will rotate on its longitudinal axis around the valve shaft The supply of current to the first drive motor 10a is controlled by a current control circuit 10b. The first drive motor 10a and the current control circuit 10b together constitute a first electronically-controlled actuator 10 which serves as a first drive means for rotating the first throttle valve 2.

The second gear 7 meshes with another drive pinion 9 which is mounted on the output shaft of a second direct current drive motor 11a so that the operation of the drive motor 11a will rotate the second throttle valve 4. A current control circuit 11b controls the supply of current to the second drive motor 11a. The second drive motor 11a and the current control circuit 11b together constitute a second electronically-controlled actuator 11 which serves as a second drive means for rotating the second throttle valve 4.

The rotational angle of the first throttle valve 2 with respect to the second throttle valve 4, which will be referred to as the relative rotational angle X, is detected by a rotational sensor 12 which produces a corresponding electrical output signal. The rotational sensor 12 may be in the form of a potentiometer.

Another sensor 18 detects the rotational speed N of the engine and the speed V of the vehicle and produces corresponding electrical output signals. The rotational speed N serves as an indicator of the operational state of the engine, and the vehicle speed V serves as an indicator of the running condition of the vehicle.

The accelerator pedal 13 of the vehicle has a return spring 15 which biases it towards a stopper 16. A position sensor 19 is mounted on the accelerator pedal 13. The position sensor 19 measures the amount A by which the accelerator pedal 13 is depressed and produces a corresponding electrical output signal.

The output signals corresponding to X, N and V, and A from the three sensors 12, 18, and 19, respectively, are input to a controller 20. Based on the values of N, V, and A, the controller 20 performs a predetermined calculation to determine a target value Xt for the relative rotational angle of the two throttle valves. The controller 20 then compares the target value Xt with the actual relative rotational angle X, which is indicated by the output from the rotation sensor 12. The controller 20 then sends command signals D1 and D2 to the first and second electronically-controlled actuators 10 and 11, respectively. Based on these command signals, the drive motors 10a and 11a are rotated until the actual relative rotational angle X equals the target value Xt. The command signals D1 and D2 include halt commands, run commands, and commands which determine the direction of rotation of the drive motors.

The engine can be throttled by rotating either one or both of the two throttle valves 2 and 4. If the first throttle valve 2 is maintained with the through hole 3 aligned with the longitudinal axis of the carburetor barrel 1 and the second throttle valve 4 is rotated by the second actuator 11, then the second throttle valve 4 will throttle the engine in a manner identical to a conventional throttle valve. On the other hand, if the second throttle valve 4 is maintained stationary and the first throttle valve 2 is rotated by the first actuator 10 from the vertical position shown in Figure 1, the opening of the through hole 3 on the upstream side will be increasingly obstructed by the walls of the carburetor barrel 1. As a result, the flow of air through the carburetor barrel 1 will be decreased as the relative rotational angle X increases, producing the same effect as if the second throttle valve 4 were rotated from an open position. Furthermore, if both throttle valves 2 and 4 are rotated simultaneously in opposite directions, the carburetor barrel 1 can be open or closed roughly twice as fast as when only one of the throttle valves is rotated. Therefore, by rotating the throttle valves simultaneously, the responsiveness of the engine can be greatly increased.

It can be seen that as long as at least one of the electronically-controlled actuators is functioning, the engine can be properly throttled. In other words, even when one of the actuators is inoperable, the vehicle can continue to run normally. A throttling apparatus in accordance with the present invention is thus far more reliable than a conventional throttling apparatus having only a single throttle valve.

## Claims

1. A throttling apparatus for the engine of a vehicle, the apparatus being characterised by a first throttle valve (2) mounted in an air intake of the engine such that relative movement therebetween permits variation of air intake through a passage (3) of the first throttle valve, a second throttle valve (4), disposed within the passage (3) of the first throttle valve (2), such that relative movement between the first and second throttle valves also permits variations of air intake into the engine, and control means (20) operative, independence upon operating conditions of the engine, for controlling both throttle valves independently of one another so as to achieve optimal air intake into the engine.

2. A throttling apparatus for the engine of an automotive vehicle comprising :
a first throttle valve which is rotably mounted in an air intake passageway of said engine, which has a through hole formed therein, and which can be continuously rotated between an open position, in which said through hole is unobstructed and air can pass through said first throttle valve via said through hole, and a closed position in which said through hole is obstructed by the walls of said air intake passageway and air can not pass through said first throttle valve;
a second throttle valve which is rotatably mounted in said through hole of said first throttle valve and which is rotatable between an open position in which air can flow through said through hole and a closed position in which said second throttle valve blocks said through hole;
first drive means for rotating said first throttle valve between its open and closed positions;
second drive means for rotating said second throttle valve between its open and closed positions;
first sensing means for sensing the relative rotational angle of said first and second throttle valves and producing a corresponding output signal;
second sensing means for sensing the operational state of said engine and producing a corresponding output signal;
third sensing means for sensing the running condition of said vehicle and producing a corresponding output signal;
fourth sensing means for sensing the amount by which the driver is depressing the accelerator pedal of said vehicle; and
control means responsive to said first through fourth sensing means for computing the optimal relative rotational angle of said first and second throttle valves based on the operating state of said engine, the running condition of said vehicle, and the amount by which said accelerator pedal is depressed and controlling said first and second drive means so that the actual relative rotational angle is equal to said optimal relative rotational angle.

3. A throttling apparatus as claimed in Claim 2, wherein said second sensing means comprises means for sensing the rotational speed of said engine; and said third sensing means comprises means for sensing the speed of said vehicle.

4. A throttle apparatus as claimed in Claim 2, wherein 1 said first throttle valve is in the form of a cylinder and rotatable about its longitudinal axis; said through hole is a straight, cylindrical hole which extends perpendicular to the rotational axis of said first throttle valve; and said second throttle valve is a butterfly valve having a rotational axis which is coaxial with the rotational axis of said first throttle valve.

FIG. 1

0262883

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 9 694 (PENTONY) (A.D. 1913) <br> * Figure 5; page 2, lines 32-46; page 3, lines 27-33 * | 1 | F 02 D 9/08 <br> F 02 D 11/10 |
| Y | | 2-4 | |
| Y | DE-A-3 519 220 (NISSAN) <br> * Abstract; page 8, lines 29-35; page 9, lines 1-23; page 10, lines 1-23 * | 2-4 | |
| X | FR-A-2 340 457 (BOSCH) <br> * Page 2, lines 28-35,40; page 3, lines 1-9; page 14, lines 35-40; page 15, lines 1-40; page 16, lines 1-23 * | 1 | |
| A | GB-A- 462 411 (GESELLSCHAFT FÜR KREDITPRÜFUNG) <br> * Page 1, lines 100-104; page 2, lines 43-66 * | 1 | |
| A | GB-A- 4 168 (NORDSTROM) (A.D. 1912) <br> * Page 2, lines 20-28; figures 1,3 * | 1 | **TECHNICAL FIELDS SEARCHED (Int. Cl.4)** <br><br> F 02 D <br> F 02 M |

The present search report has been drawn up for all claims

| Place of search | Date of completion of the search | Examiner |
|---|---|---|
| THE HAGUE | 06-01-1988 | JORIS J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

\&  : member of the same patent family, corresponding document

EPO FORM 1503 03.82 (P0401)